(19)

Europäisches
Patentamt
European
Patent Office
Office européen
des brevets

(11) **EP 3 093 816 A1**

(12) **EUROPEAN PATENT APPLICATION**
published in accordance with Art. 153(4) EPC

(43) Date of publication:
**16.11.2016 Bulletin 2016/46**

(21) Application number: **15735514.0**

(22) Date of filing: **09.01.2015**

(51) Int Cl.:
*G06Q 30/06* (2012.01)          *G06Q 30/02* (2012.01)

(86) International application number:
**PCT/KR2015/000252**

(87) International publication number:
**WO 2015/105382 (16.07.2015 Gazette 2015/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.01.2014 KR 20140003611**

(71) Applicant: **Bytegram Co., Ltd.
Seoul 152-858 (KR)**

(72) Inventor: **LEE, Yong Chae
Seoul 157-886 (KR)**

(74) Representative: **Groth & Co. KB
P.O. Box 6107
102 32 Stockholm (SE)**

(54) **SERVICE PLATFORM PROVIDED WITH SHOPPING MALL SYSTEM FOR PROVIDING SERVICE PRODUCT ACCORDING TO SALES RECORD AND PRODUCT PROMOTION SYSTEM FOR PROVIDING PROMOTIONAL GIVEAWAY PRODUCT ACCORDING TO PRODUCT PROMOTION, AND SERVICE PROVIDING METHOD**

(57)    Disclosed in one embodiment of the present invention is a service platform provided with a shopping mall system for providing a service product according to a sales record, the service platform comprising: a product sales controller for controlling a product sales- and purchase-related process on the shopping mall system; a shopping mall service product generation controller for, when the product sales controller sells a specific product, controlling generation of a predetermined shopping mall service product according to a sales record of the relevant product; and a shopping mall service product lottery controller for targeting purchasers who have purchased the product, drawing lots for the shopping mall service product generated by the shopping mall service product controller, and distributing the shopping mall service product.

FIG. 1

**Description**

[TECHNICAL FIELD]

One or more embodiments of the present invention relate to a service platform provided with a shopping mall system for providing a service product according to a sales record and a product promotion system for providing a promotional giveaway product according to a product promotion, and a service providing method.

[BACKGROUND ART]

Information communication technologies represented by the Internet and mobile communication have changed the lifestyles of modern people. Internet-capable personal computers are distributed to almost all houses, schools, and offices to obtain information using web sites, to purchase products using electronic commerce, and to exchange news through emails. Even a few years ago, people may use only voice call-oriented mobile communication services using their mobile communication terminals. However, recently, wireless internet services, which receive data communication services using the Internet, have been provided using mobile communication terminals.
Meanwhile, recently, shopping mall services and product promotion services using wired and wireless Internet services have been in the limelight. There have been typical services such as Amazon (http://www.amazon.com), Auction (http://www.auction.co.kr), and Gmarket (http://www.gmarket.co.kr).
The background art described above has been possessed by the inventor to draw the present invention. However, the background art may be technical information obtained in the process of drawing the present invention and should not be the prior art opened to the general public before applying for the present invention.

[DETAILED DESCRIPTION OF THE INVENTION]

[TECHINICAL PROBLEM]

One or more embodiments of the present invention provide a service platform provided with a shopping mall system for providing a service product according to a sales record and a product promotion system for providing a promotional giveaway product according to a product promotion, and a service providing method.

[TECHNICAL SOLUTION]

According to one or more embodiments of the present invention, a service platform provided with a shopping mall system for providing a service product according to a sales record may include a product sales controller for controlling a product sales- and purchase-related process on the shopping mall system, a shopping mall service product generation controller for, when the product sales controller sells a specific product, controlling generation of a predetermined shopping mall service product according to a sales record of the relevant product, and a shopping mall service product lottery controller for targeting purchasers who have purchased the product, drawing lots for the shopping mall service product generated by the shopping mall service product controller, and distributing the shopping mall service product.
According to one or more embodiments of the present invention, a service platform provided with a product promotion system for providing a promotional giveaway product according to a product promotion may include a promotional product manager for registering a promotional product, received from a terminal of a seller who wants to promote the product, in the product promotion system and managing the received promotional product, a promotional message manager for receiving a promotional object from a terminal of a purchaser who wants to perform a promotion and sending a predetermined promotional message to the promotional object, a point manager for managing points possessed by the purchaser who wants to perform the promotion and subtracting a predetermined point when the promotional message is sent, a promotional product giveaway lottery score manager for managing a promotional product giveaway lottery score of determining whether a promotional product giveaway is won for the purchaser, and a promotional product giveaway winning controller for determining whether the promotional product giveaway is won for the purchaser, based on a promotional product giveaway lottery score extracted from the promotional product giveaway lottery score manager.
According to one or more embodiments of the present invention, a service providing method provided with a shopping mall system for providing a service product according to a sales record may include selling and purchasing, by a product sales controller, a product on the shopping mall system, generating, by a shopping mall service product generation controller, a predetermined shopping mall service product according to a sales record of a relevant product, when the specific product is sold, and targeting, by a shopping mall service product lottery controller, purchasers who have purchased the product, drawing, by the shopping mall service product lottery controller, lots for the generated shopping mall service product, and distributing, by the shopping mall service product lottery controller, the shopping mall service product.

According to one or more embodiments of the present invention, a service providing method provided with a product promotion system for providing a promotional giveaway product according to a product promotion may include registering, by a promotional product manager, a promotional product, received from a terminal of a seller who wants to promote the product, in the product promotion system and managing, by the promotional product manager, the received promotional product, receiving, by a promotional message manager, a promotional object from a terminal of a purchaser who wants to perform a promotion and sending, by the promotional message manager, a predetermined promotional message to the promotional object, subtracting, by a point manager, a predetermined point from the purchaser who wants to perform the promotion, when the promotional message is sent, calculating, by a promotional product giveaway lottery score manager, a promotional product giveaway lottery score of determining whether a promotional product giveaway is won for the purchaser, and determining, by a promotional product giveaway winning controller, whether the promotional product giveaway is won for the purchaser, based on the calculated promotional product giveaway lottery score.

Other aspects, advantages, and salient features of the disclosure will become apparent to those skilled in the art from the following detailed description, which, taken in conjunction with the annexed drawings, discloses various embodiments of the present disclosure.

[ADVANTAGEOUS EFFECTS OF THE INVENTION]

A fast product promotion effect may be provided to a seller and there may be an effect of meeting the necessity of a tool which may raise branch awareness by providing a system which promotes products to acquaintances of the purchaser or main agents of service operation and accumulating giveaway lottery scores based on promotional history to recommend service products by a service platform and a service providing method about embodiments of the present invention. Further, an effect of providing easy access to products to the purchaser and saving the cost of using a service advertisement to a seller may be expected by providing a tool which may obtain a service product provided from the seller.

[DESCRIPTION OF THE DRAWINGS]

FIG. 1 is a drawing illustrating a configuration of a service platform provided with a shopping mall system for providing a service product according to a sales record and a product promotion system for providing a promotional giveaway product according to a product promotion, according to an embodiment of the present invention;

FIG. 2 is a block diagram illustrating a detailed configuration of a shopping mall system of a service platform of FIG. 1;

FIGS. 3, 4, and 5 are flowcharts illustrating a service providing method used by a shopping mall system of a service platform of FIG. 2;

FIG. 6 is a drawing illustrating a process of generating a seed string according to an embodiment of the present invention;

FIG. 7 is a block diagram illustrating a detailed configuration of a product promotion system of a service platform of FIG. 1; and

FIG. 8 is a flowchart illustrating a service providing method using a product promotion system of a service platform of FIG. 2.

[BEST MODE]

The prevent invention may make various modifications and may have various embodiments. Specific embodiments have been exemplified in the drawings and a related detailed description has been disclosed. The present disclosure and methods of accomplishing the same may be understood more readily by reference to the following detailed description of embodiments and the accompanying drawings. However, the present invention may be embodied in many different forms, and should not be construed as being limited to the embodiments set forth herein. In embodiments disclosed herein, the terms such as "1st", "2nd", "first", or "second", and the like may be used for the purpose of distinguishing one element from another element, but do not limit the corresponding elements. Also, the terms of a singular form may include plural forms unless otherwise specified. Also, the terms "have", "may have", "include" and "comprise", or "may include" and "may comprise" indicate existence of features or elements described herein but do not exclude presence of one or more additional features or elements. Also, in the drawings, for convenience of description, elements may be exaggerated or reduced in size. For example, the size and thickness of each element shown in the drawings is arbitrarily shown for better understanding and ease of description, the present invention is not limited to thereto.

Hereinafter, embodiments of the present invention are described in detail with reference to the accompanying drawings. Upon describing embodiments of the present invention with reference to the accompanying drawings, the same denotations refer to the same or corresponding elements. A repeated description of this will be omitted.

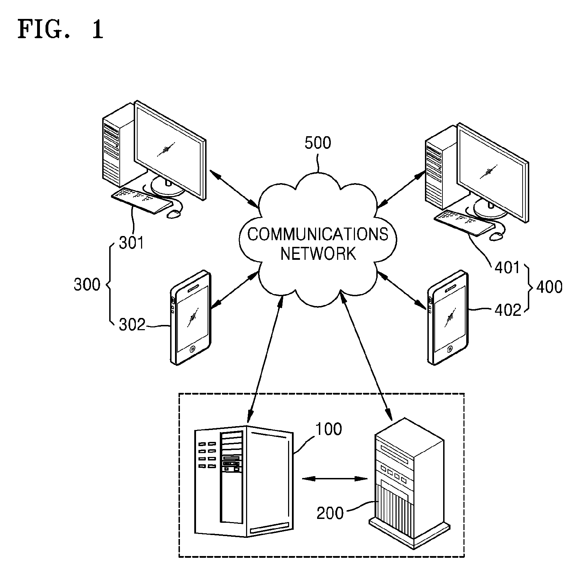

FIG. 1 is a drawing illustrating a configuration of a service platform provided with a shopping mall system for providing a service product according to a sales record and a product promotion system for providing a promotional giveaway product according to a product promotion, according to an embodiment of the present invention.

Referring to FIG. 1, the service platform according to an embodiment of the present invention may include a plurality of purchaser terminals 300, a plurality of seller terminals 400, a shopping mall system 100 for providing a predetermined shopping service to the purchaser terminals 300 and the seller terminals 400, a product promotion system 200 for providing a predetermined promotion service to the purchaser terminals 300 and the seller terminals 400, and a communications network 500 for connecting the plurality of purchaser terminals 300 and the plurality of seller terminals 400 with the shopping mall system 100 and the product promotion system 200.

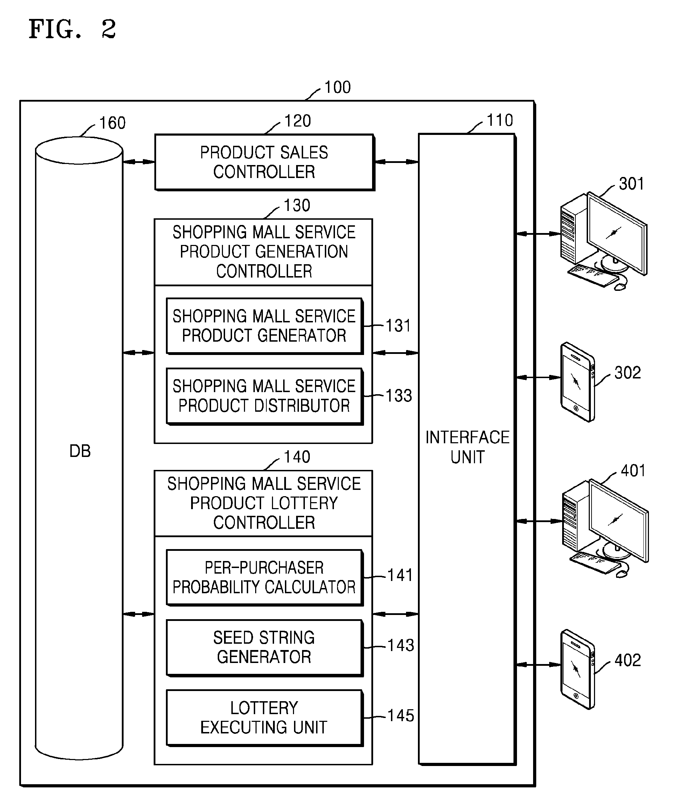

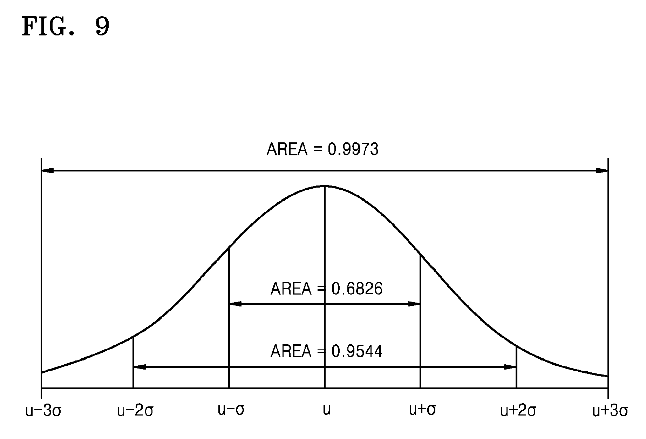

Specifically, there has been the issue that a conventional shopping mall operation method is operated by a high price dumping war and a high fee for service based on competition between sellers and that it is difficult to brand products based on similarity between products. To address the issue, the service platform provided with the shopping mall system for providing the service product according to the sales record and the product promotion system for providing the promotional giveaway product according to the product promotion may provide a tool, which may notify people of products, to the seller and may provide an opportunity to obtain a product in various ways to a purchaser to guide the seller to promote the product alone and to guide the purchaser to purchase the product alone. In addition, in an embodiment of the present invention, the shopping mall system may provide a shopping mall service product according to a product sales record to additionally inspire the purchaser to a purchase will. A description will be given in detail of this with reference to FIGS. 2 to 9.

Referring again to FIG. 1, the plurality of purchaser terminals 300 and the plurality of seller terminals 400 may refer to communication terminals which may use a web service in a wired and wireless communication environment. Herein, the purchaser terminal 300 and the seller terminal 400 may be a personal computer 301 and a personal computer 401 of a user, respectively. Alternatively, the purchaser terminal 300 and the seller terminal 400 may be a portable computer 302 and a portable computer 402 of a user, respectively. In FIG. 1, each of the portable terminals 302 and 402 are shown as a smartphone. However, the scope and spirit of the prevent invention is not limited thereto. As described above, a terminal which has an application for performing web browsing or an information communication device which may access an information communication network may be employed without a limitation.

Meanwhile, the communications network 500 may play a role in connecting the plurality of purchaser terminals 300 and the plurality of seller terminals 400 with the shopping mall system 100 and the product promotion system 200. In other words, the communications network 500 may mean a communications network which provides an access path such that the purchaser terminals 300 and the seller terminals 400 access the shopping mall system 100 and/or the product promotion system 200 and exchange packet data between the shopping mall system 100 and/or the product promotion system 200.

Meanwhile, the shopping mall system 100 may refer to a kind of closed shopping mall system which transacts a product requested to sell by the seller, generates shopping mall service products based on a sales result, and distributes the shopping mall service products to purchasers in a lottery. Herein, the shopping mall service product may refer to a service product which is additionally provided to purchasers by a seller according to a product sales record in the shopping mall system 100 and may be provided as a service to the purchaser in a lottery and the like.

Meanwhile, the product promotion system 200 may mean a system where a purchaser promotes a product requested to be promoted by a seller to his or her acquaintances and obtains suitable rewards for this. Herein, the promotion giveaway product may mean a giveaway which is provided from the seller to the purchaser according to a promotion record of the purchaser. The promotion giveaway product may be provided as a service to the purchaser, who promotes the product, in a lottery and the like.

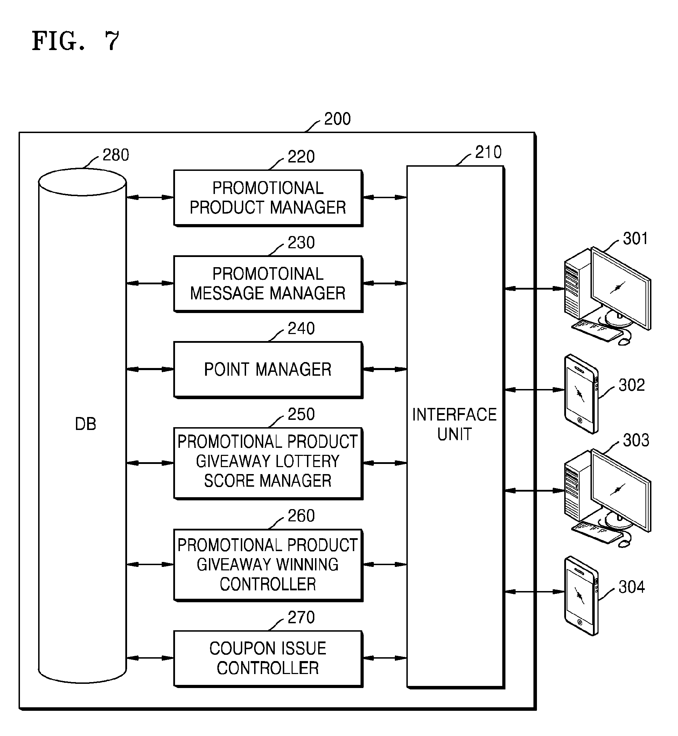

Meanwhile, although not illustrated, the shopping mall system 100 and the product promotion system 200 may share a separate product management database, which manages shopping mall service products and promotional product giveaways, with each other. Alternatively, as shown in FIGS. 2 and 7, the shopping mall system 100 and the product promotion system 200 may have independent databases and may be configured such that these databases cluster and connect together.

Hereinafter, a description will be given in detail of this.

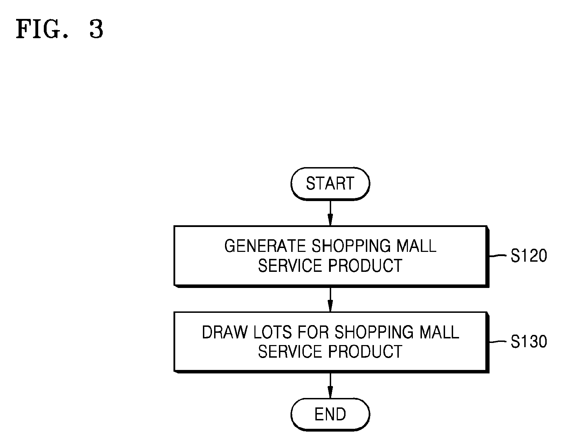

FIG. 2 is a block diagram illustrating a detailed configuration of a shopping mall system of a service platform of FIG. 1. FIGS. 3, 4, and 5 are flowcharts illustrating a service providing method used by a shopping mall system of a service platform of FIG. 2.

Referring to FIG. 2, a shopping mall system 100 of a service platform according to an embodiment of the present invention may include an interface unit 110, a product sales controller 120, a shopping mall service product generation controller 130, a shopping mall service product lottery controller 140, and a database 160. The shopping mall service product generation controller 130 may include a shopping mall service product generator 131 and a shopping mall service product distributor 133. The shopping mall service product lottery controller 140 may include a per-purchaser probability calculator 141, a seed string generator 143, and a lottery execution unit 145. A description will be given in detail of this.

The interface unit 110 may provide a communication interface necessary for interworking with a communications network 500 and providing a communication signal between the shopping mall system 100, purchaser terminals 300, and seller terminals 400 in the form of packet data.

The product sales controller 120 may manage and control a product sales- and purchase-related process on the shopping mall system 100, for product registration, product search, product purchase, and payment. Since, the product sales controller 120 is similar to a product sales controller of a typical shopping mall system, a detailed description of this will be omitted from the present disclosure.

The shopping mall service product generation controller 130 may play a role in managing and controlling a process of generating a shopping mall service product according to a sales record of a specific product in the shopping mall system 100. The shopping mall service product generation controller 130 may include the shopping mall service product generator 131 and the shopping mall service product distributor 133.

First of all, when an order completion record is generated after an order completion request of a specific product is received, the shopping mall service product generator 131 may play a role in generating a shopping mall service product based on accumulated sales amounts for the corresponding product. A table configuration [Table 1 - sales product table] of a database for each sales product and a table configuration [Table 2 - order completion table] of a database for an individual order are as follows:

[Table 1]

| Product number |
| --- |
| Product name |
| Product description |
| Seller's contact information |
| Amount necessary for generating a shopping mall service product |
| Input date |
| The person in charge |
| Amount of sales interim accumulation |
| The sum of amounts of generating a shopping mall service product |

[Table 2]

| Order number |
| --- |
| Product number |
| Amount of orders |
| Purchaser |
| Delivery place |
| Purchase date |
| whether a shopping mall service product is accumulated |

A process of generating a shopping mall service product in the shopping mall service product generation controller 130 is as follows:

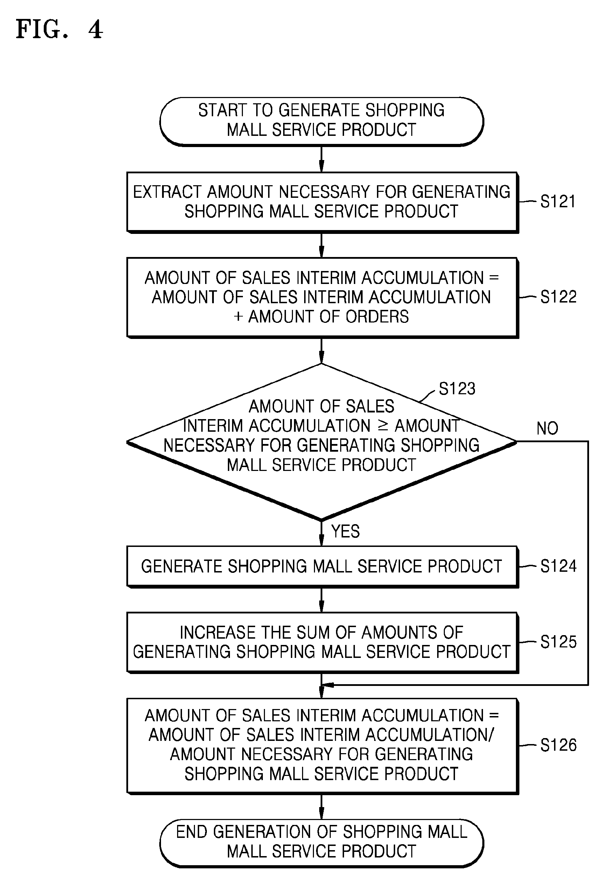

Referring to FIG. 4, first of all, if an order completion record is generated after an order completion request of a specific product is received, the shopping mall service product generator 131 may extract an amount necessary for generating a shopping mall service product and an amount of sales interim accumulation from a sales product table of the corresponding product (step S121). Next, the shopping mall service product generator 131 may update the sum of the extracted amount of sales interim accumulation and an amount of order included in an order completion record as a new amount of sales interim accumulation (step S122). The shopping mall service product generator 131 may determine whether the amount of sales interim accumulation is greater than or equal to the amount necessary for generating the shopping mall service product (step S123). As a result of the determination, if the amount of sales interim accumulation is greater than or equal to the amount necessary for generating the shopping mall service product, the shopping mall service product generator 131 may generate a new service product (step S124). The shopping mall service product generator 131 may increase the sum of amounts of generating the shopping mall service product (step S125). The shopping mall service product generator 131 may update a remainder value, in which the amount of sales interim accumulation is divided by the amount necessary for generating the shopping mall service product, as a new amount of sales interim accumulation (step S126).

For example, it is presupposed that a shopping mall service produce is provided one by one whenever 100 products are sold, in other words, that an amount necessary for generating a shopping mall service product is 100. It is assumed that a current amount of sales interim accumulation is 95 and that an amount of order of a purchaser, currently included in the order completion record, is 3. At this time, if the order completion record is generated, first of all, the shopping mall service product generator 131 may extract 100 which is the amount necessary for generating the shopping mall service product. The shopping mall service product generator 131 may update 98 which is the sum of 95 which is the amount of sales interim accumulation and 3, which is the amount of orders, as a new amount of sales interim accumulation. The shopping mall service product generator 131 may determine whether 98, which is the amount necessary for generating the shopping mall service product, is greater than or equal to 100. At this time, since 98, which is the new amount of sales interim accumulation, is less than 100, which is the amount necessary for generating the shopping mall service product, the shopping mall service product generator 131 may not generate the new shopping mall service product. The shopping mall service product generator 131 may update 98, which is a remainder value in which the amount of sales interim accumulation is divided by the amount necessary for generating the shopping mall service product, as a new amount of sales interim accumulation and may end the above-mentioned process.

Meanwhile, in this state, if the purchaser orders 3 products additionally, first of all, the shopping mall service product generator 131 may extract 100 which is the amount necessary for generating the shopping mall service product. The shopping mall service product generator 131 may update 101, which is the sum of 98, which is the amount of sales interim accumulation, and 3, which is the amount of orders, as a new amount of sales interim accumulation. The shopping mall service product generator 131 may determine whether 101, which is the new amount of sales interim accumulation, is greater than or equal to 100, which is the amount necessary for generating the shopping mall service produce. At this time, since 101, which is the new amount of sales interim accumulation, is greater than 100, which is the amount necessary for generating the shopping mall service product, the shopping mall service product generator 131 may generate a new shopping mall service product and may increase the sum of amounts of generating the shopping mall service product by 1. Subsequently, the shopping mall service product generator 131 may update 1, which is a remainder value in which the amount (i.e., 101) of sales interim accumulation is divided by the amount (i.e., 100) of generating the shopping mall service product, as a new amount of sales interim accumulation and may end the process of generating the shopping mall service product.

The shopping mall service product distributor 133 may play a role in distributing shopping mall service products on a per time slot basis. Herein, the shopping mall service product distributor 133 may distribute shopping mall service products, accumulated for a previous day, in a system initialization time of a subsequent day. [Table 3 - time division table] and [Table 4 - shopping mall service product allocation table] used to distribute the shopping mall service products are as follows:

[Table 3]

| Time division number |
| --- |
| Start time |
| End time |
| Probability of allocating shopping mall service products |

[Table 4]

| Time division number |
| --- |
| Product number |
| The number of allocated shopping mall service products |

At this time, probabilities of allocating the shopping mall service products of the time division table may be set to be the same as each other on a per time slot basis by a default setting. Subsequently, the probabilities of allocating the shopping mall service products may be adjusted to be different from each other on a per time slot basis. The method of distributing the shopping mall service products on a per time slot basis is as follows:

First of all, the shopping mall service product distributor 133 may obtain an amount of shopping mall service products for each product, may obtain an amount of shopping mall service products for each time division, and may store the obtained amounts. At this time, the amount of the shopping mall service products for each time division may be obtained through {the probability of allocating the shopping mall service products * an amount of the shopping mall service products}. In this state, the shopping mall service products may be arranged in an order of time division with a high probability of allocating the shopping mall service products. Also, a counter of counting an amount of allocated shopping mall service products may be set to 0.

Subsequently, the shopping mall service product distributor 133 may determine whether the amount of the shopping mall service products for each time division is greater than or equal to 0. If the amount of the shopping mall service products for each time division is greater than or equal to 0, the shopping mall service product distributor 133 may generate a record in a shopping mall service product allocation table, may add the amount of the shopping mall service products for each time division to the counter of counting the amount of the allocated shopping mall service products, and may newly store the added value. Meanwhile, if the amount of the shopping mall service products for each time division is less than 0, the shopping mall service product distributor 133 may set the number of allocated shopping mall service products of the shopping mall service product allocation table to 1 to generate a record and may increase the counter of counting the amount of the allocated shopping mall service products.

Subsequently, if there is the end of time division or if the counter of counting the amount of allocated shopping mall service products has an amount or more of shopping mall service products for each product, the shopping mall service product distributor 133 may end the processes. If there are allocated shopping mall service products left, the shopping mall service product distributor 133 may update an accumulation record one by one in an order of a higher probability. Consequently, a field of the sum of amounts of generating shopping mall service products in a sales product table may be updated to 0.

Meanwhile, if a certain time arrives, in targeting purchasers and drawing lots for shopping mall service products, the shopping mall service product lottery controller 140 may play a role in calculating a probability of winning for each purchaser, assigning a seed string for lottery for each purchaser, and drawing lots for the shopping mall service products. The shopping mall service product lottery controller 140 may include the per-purchaser probability calculator 141, the seed string generator 143, and the lottery executing unit 145.

The per-purchaser probability calculator 141 may play a role in calculating a probability of winning for each purchaser. At this time, a purchaser may be assigned a basis probability of winning by purchasing a basic coupon (e.g., a shopping basket) and may participate in drawing lots for shopping mall service products. If the purchaser uses his or her terminal using a registered static internet protocol (IP) or in a place of registered location information, the per-purchaser probability calculator 141 may provide special additional benefits to him or her, for example, may enter for specially provided products, may provide various free and discounted coupons to him or her, and may increase a probability of winning by setting an additional probability. In addition, if the purchaser purchases a strengthening coupon (e.g., a booster) for increasing a probability of winning, an additional probability is set to enhance the probability of winning.

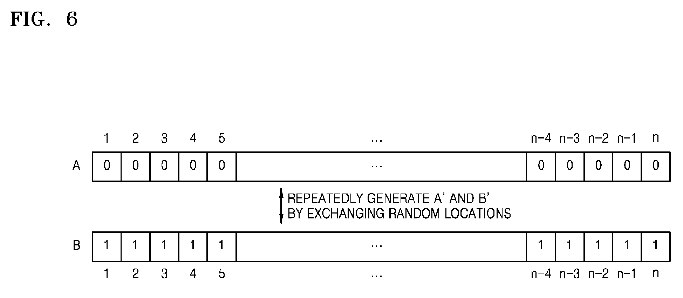

The seed string generator 143 may play a role in a kind of winning probability generator for generating a seed string for lottery. FIG. 6 is a drawing illustrating a process of generating a seed string. Referring to FIG. 6, first of all, two strings, each of which has an n-length, in other words, a string A and a string B are given. At this time, all of the string A may be filled with 0, and all of the string B may be filled with 1. Subsequently, a string A' and a string B' may be generated by exchanging any locations of the string A and the string B. A record may be generated in a seed string table (Table 5) based on the number of 1 in the generated string A'. At this time, a configuration of the seed string table may be as follows:

[Table 5]

| Probability (the number of 1, unique key) | Seed string (generated string A') |
| --- | --- |

In other words, if n is 100 and if the number of 1 in the generated string A' is 17, the generated string A' may be stored as a seed string corresponding to a 17% probability of winning.

Subsequently, a string may be repeatedly generated until the number of 1 is 1 to n using the generated string A' and the generated string B'. At this time, if the number of 1 is overlapped, a generated string may be discarded and a string A' and a string B' may be repeatedly and newly generated. The string A' between the string A' and the string B' may be inserted as a record into the seed string table to generate and store seed strings corresponding to all probabilities of winning.

Meanwhile, the seed string table may be automatically deleted and may be generated again periodically.

Probability values to be stored in probability fields, for example, values of 100/n may be stored in the probability fields, respectively.

The lottery executing unit 145 may play a role in drawing lots using the a probability of winning for each purchaser, calculated by the per-purchaser probability calculator 141, and the seed string generated by the seed string generator 143 and determining whether it is won for each purchaser.

The method of drawing lots for shopping mall service products in the shopping mall service product lottery controller 140 may be as follows:

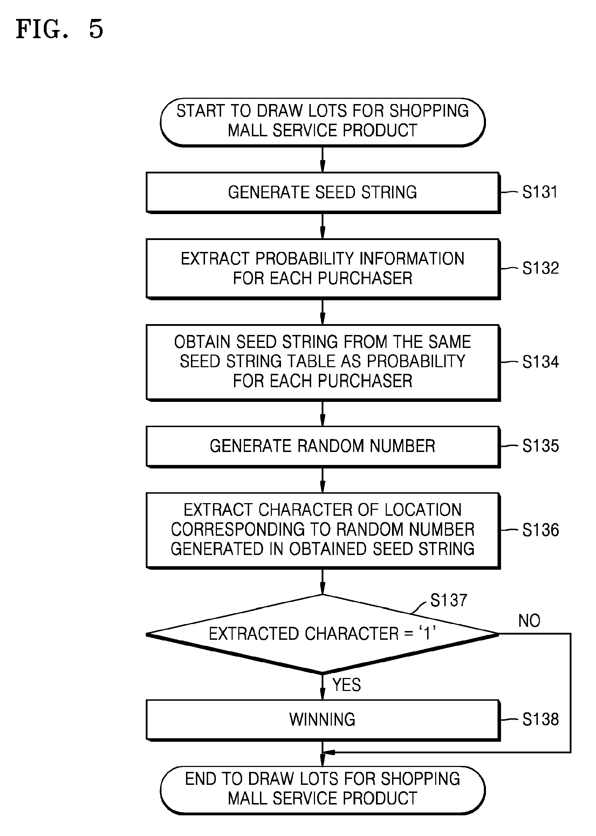

Referring to FIG. 5, first of all, if a certain lottery time arrives, the seed string generator 143 of the shopping mall service product lottery controller 140 may generate a seed string which plays a role as a winning probability generator (step S131). Herein, this seed string may be generated when a certain lottery time arrives or before the certain lottery time. Alternatively, a value which is periodically and automatically generated and stored may be used for a lottery.

Subsequently, the per-purchaser probability calculator 141 of the shopping mall service product lottery controller 140 may extract a probability of winning for each purchaser (step S132). At this time, a purchaser should basically purchase a shopping basket to participate in drawing lots for shopping mall service products and may be assigned an additional probability based on whether to use a static IP, whether to use his or her terminal in a place of registration location information, whether to purchase a booster, and the like. Meanwhile, the probability of winning for each purchaser, calculated by the per-purchaser probability calculator 141, may be displayed on each of the purchaser terminals 300. Meanwhile, FIG. 2 illustrates that the per-purchaser probability calculator 141 in the shopping mall system 100 calculates the probability of winning for each purchaser. However, an application installed in each of the purchaser terminals 300 may calculate a probability of winning and may send the calculated probability of winning to the shopping mall system 100.

At this time, the application installed in each of the purchaser terminals 300 may check whether the purchaser uses a static IP, whether the purchaser uses his or her terminal in a place of registered location information, whether the purchaser uses a basic coupon, and whether the purchaser uses a strengthening coupon. Each of the purchaser terminals may calculate a probability of winning based on encrypted information and may display the probability of winning.

Subsequently, the lottery executing unit 145 of the shopping mall service product lottery controller 140 may draw lots for each purchaser. A description will be given in detail of this. First of all, the lottery executing unit 145 may obtain a seed string from the same seed string table as a probability of winning of a corresponding purchaser (step S134). For example, if the purchaser "A" has a 70% probability of winning calculated by the per-purchaser probability calculator 141, the lottery executing unit 145 may extract a seed string of a 70% probability from the seed string table. Subsequently, the lottery executing unit 145 may generate a predetermined random number using a random number generator (step S135). The lottery executing unit 145 may extract a character of a location corresponding to a random number generated in the obtained seed string (step S136). The lottery executing unit 145 may determine whether the extracted character is '1' (step S137). If the extracted character is '1' as a result of the determination, the lottery executing unit 145 may determine that it is won for the purchaser (step S138). If the extracted result is '0' as a result of the determination, the lottery executing unit 145 may determine that it is not won for the purchaser.

Meanwhile, if it is won for the purchaser, the lottery executing unit 145 may verify the number of allocated shopping mall service products of a shopping mall service product allocation table. If the number of allocated shopping mall service products is 0, the lottery executing unit 145 may determine that it is not won again for the purchaser. If the number of allocated shopping mall service products is greater than or equal to 1, the lottery executing unit 145 may determine that it is finally won for the purchaser and may reduce the number of allocated shopping mall service products by 1.

An example of a seed string of a 70 probability in the seed string table may be as follows:

[Table 6]

| 1 | 0 | 1 | 1 | 1 | 0 | 1 | 1 | 0 | 1 |
|---|---|---|---|---|---|---|---|---|---|

If a random number generated by the random number generator is 7, since a character of a location corresponding to 7 which is the random number generated in the seed string is 1, a shopping mall service product is won for a corresponding purchaser.

Meanwhile, although not illustrated, the per-purchaser probability calculator 141 may first determine whether a current condition is a service exception condition before calculating a probability of winning for each purchaser. In other words, if there is lottery failure irrespective of a probability on service operation, for example, if the number of participants is not reached or if there is a system exception situation, the per-purchaser probability calculator 141 may omit the processes and may determine that it is not won for the purchaser to end the lottery process or to delay a certain time.

[MODE OF THE INVENTION]

Hereinafter, a description will be given in detail of a product promotion system 200 of a service platform according to an embodiment of the present invention.

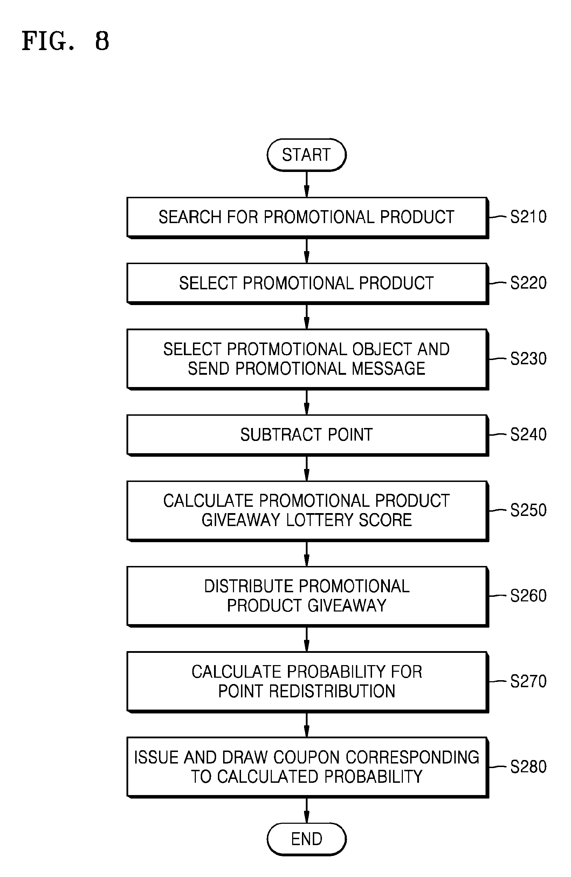

FIG. 7 is a block diagram illustrating a detailed configuration of a product promotion system of a service platform of FIG. 1. FIG. 8 is a flowchart illustrating a service providing method using a product promotion system of a service platform of FIG. 2.

Referring to FIG. 7, a product promotion system 200 of a service platform according to an embodiment of the present invention may include an interface unit 210, a promotional product manager 220, a promotional message manager 230, a point manager 240, a promotional product giveaway lottery score manager 250, a promotional product giveaway winning controller 260, a coupon issue controller 270, and a database 280.

The product promotion system 200 of the service platform according to an embodiment of the present invention may assign a promotional product giveaway lottery score to a purchaser who performs a promotion rather than subtracting a tangible/intangible electronic transaction unit (e.g., a point) replaced with goods and may provide promotional product giveaways to the purchaser in an order of promotional product giveaway lottery scores which are obtained during a certain period of time by him or her. Also, some of subtracted points may be returned as a coupon of a certain probability to the purchaser, or some of the subtracted points may be returned to purchasers in the form of redistribution.

Specifically, the interface unit 210 may provide a communication interface necessary for interworking with a communications network 500 and providing a communication signal between the produce promotion system 200, purchaser terminals 300, and seller terminals 400 in the form of packet data.

The promotional product manager 220 may play a role in allowing a seller who wants to promote his or her products to register the promotional products on the product promotion system 200 and allowing a purchaser who wants to perform a promotion and obtain a predetermined giveaway to search for a promotional product registered on the product promotion system 200. Herein, the promotional product may be a product the seller wants to promote. The seller may register a product he or she wants to promote on the product promotion system 200.

The promotional message manager 230 may play a role in allowing the purchaser who will perform a promotion to select a promotional object to which he or she will send a promotional message, among his or her acquaintances and to send the promotional message to the selected promotional object.

The point manager 240 may play a role in managing points of the purchaser who will perform the promotion. Specifically, the points may be points which are should be possessed by the purchaser to promote a product on the product promotion system 200. If the purchaser sends a product promotional message to his or her acquaintances, predetermined points are subtracted from possessed points. Also, the points may refer to points which may be additionally provided to the purchaser by a promotion effect.

Herein, in the product promotion system according to an embodiment of the present invention, points subtracted from the purchaser and a giveaway lottery score of determining the probability that a giveaway will be won for the purchaser may be determined based on a length of a path of sending the product promotional message by differentiation, an equal interval, or a random number. A description will be given in detail of this.

The promotional product giveaway lottery score manager 250 may play a role in managing a promotional product giveaway lottery score of determining whether a promotional product giveaway is won for the purchaser. The promotional product giveaway lottery score may be assigned based on the above-mentioned points. A description will be given in detail of calculation of the promotional product giveaway lottery score.

The promotional product giveaway winning controller 260 may play a role in determining whether a promotional product giveaway is won, based on the promotional product giveaway lottery score extracted by the promotional product giveaway lottery score manager 250.

After the promotional product giveaway winning controller 260 determines whether the promotional product giveaway is won for the purchaser, the coupon issue controller 270 may play a role in issuing a coupon with a certain probability of winning to the purchaser based on the promotional product giveaway lottery score. In this case, assuming that a distribution of promotional product giveaway lottery scores of all purchasers follows a normal distribution, the coupon issue controller 270 may calculate a probability of winning of an individual purchaser.

Hereinafter, a process of promoting products and providing promotional product giveaways to purchasers, who have performed a promotion, in a lottery in the product promotion system 200. First of all, a description will be given of an example of tables of various databases used in the product promotion system 200.

A data table for each promotional product and a record stored in the table are exemplified as Table 7.

[Table 7]

| Product number | 5 | 6 | 7 |
|---|---|---|---|
| First term | 50 | 50 | 50 |

(continued)

| Common difference | -10 | -10 | -10 |
|---|---|---|---|
| Maxterm | 5 | 5 | 5 |
| Product image | Aaa.jpg | Bbb.jpg | Ccc.jpg |
| Product video | Aaa.avi | Bbb.avi | Ccc.avi |
| Product description | Good product | Best product | High-quality Product |

Herein, the product number may be automatically generated when a new promotional product is inserted into a data record, and the other items may be input by a manager and the like. When a promotional product is input, it is checked whether point data based on a first term and a common difference is present in a point data table described below. If the point data based on the first term and the common difference is not present in the point data table, a record may be inserted into the point data table based on a predetermined Equation (Equations 1 to 3 described below).

For example, when a 5th promotional product is inserted into a promotional product data table, a record of a product number 5 may be generated. Also, point data corresponding to an input first term 50 and an input common difference -10 may be inserted into the point data table (a description will be given for an example of data inserted into the point data table). Also, when 6th and 7th promotional products are inserted into the promotional product data table, a record of a product number 6 and a record of a product number 7 may be generated. Also, since point data corresponding to an input first term 50 and an input common difference -10 is present in the point data table, a separate record may not generated in the point data table.

Meanwhile, as such, when a new promotional product is inserted into a data record, if a maxterm is not input, a maxterm n may be automatically calculated with reference to the point data table, whereas, if the maxterm is input, the input value may be stored without change. For example, if the maxterm is not input, a common difference may be successively subtracted from a first term and a value until the subtracted value is of a positive number may be stored as the maxterm. Meanwhile, if the maxterm is input, the input value may be stored as the maxterm n without change.

Next, an example of the point data table and a record stored in the corresponding table may be as follows: Herein, the point data table may be a table which stores points for each first term and points for each common difference after the points for each first term and the points for each common difference are previously generated, which will be provided to the product promotion system. A record when a first term is 50 and when a common difference is -10 is exemplified as Table 8.

[Table 8]

| First term a | 50 | 50 | 50 | 50 | 50 |
|---|---|---|---|---|---|
| Common difference | -10 | -10 | -10 | -10 | -10 |
| Term number ($n^{th}$) | 1 | 2 | 3 | 4 | 5 |
| Subtraction point | 50 | 40 | 30 | 20 | 10 |
| Push point | 25 | 45 | 60 | 70 | 75 |
| Pop point | 75 | 70 | 60 | 45 | 25 |
| Generation day | 2013-12 | 2013-12 | 2013-12 | 2013-12 | 2013-12 |

The point data table may be automatically generated using a tool in the product promotion system 200. Alternatively, as described above, the point data table may be automatically generated when a record is generated in the promotional product data table. Also, the point data table may be continuously generated within a limit where a subtraction point is greater than 0, irrespective of a maxterm value stored in the above-mentioned promotional product data table. A subtraction point, a push point, and a pop point corresponding to a term number may be stored in the point data table.

Herein, a subtraction point $a_n$, a push point $b_n$, and a pop point $c_n$ may be obtained by Equations 1 to 3 below. (The subtraction point may be a point to be subtracted from an account of a purchaser to perform a promotion. The push point may be a value in which points to be used as a promotional product giveaway lottery score are accumulated among points subtracted from respective purchasers as a promotional message is sent. The pop point may be a point to be used as a promotional product giveaway lottery score in reverse order of the push point. When a path of sending the promotional message is shorter, the push point and the pop point have a larger value.)

[Equation 1]

an = a + (n-a)d (a: first term, d: common difference)

[Equation 2]

$$b_n = (b_{n-1} + \frac{a + (n-1)d}{div}) \times (1-c)$$

div: division rate (provider division rate), c: fee for business (% rate)

(where, ao=0, $b_n$ > 0, div > 0 natural number, $0 \leq c \leq 1$)

[Equation 3]

$C_n = b_{max} - 1 + n$

When a is 50, when d is -10, when a maximum value of n is 5, and when div is 2, a subtraction point, a push point, and a pop point of each purchaser, calculated by Equations 1 to 3, are exemplified as the above-mentioned [point data table].

An embodiment of the present invention is exemplified as a subtraction point is reduced by an arithmetic progression to differentiate between a point subtracted from a purchaser from a giveaway lottery score of determining the probability that a giveaway is won for the purchaser based on a length of a path of sending a product promotional message. However, the scope and spirit of the present invention is not limited thereto. The subtraction point may be reduced by a geometric progression. Alternatively, the subtraction point may not be changed such that the point subtracted from the purchaser is the same as the promotion lottery score of determining the probability that the giveaway is won for the purchaser based on the length of the path of sending the product promotional message. Alternatively, a parameter, such as a common difference or a common rate, for determining a subtraction point may be determined by generation of a random number such that promotion lottery scores may be randomly divided. Further, if a parameter of determining a subtraction point is determined by generation of a random number, an approximation function may be calculated using an interpolating polynomial and the approximation function may symmetrically move on a Y-axis to approximate a pop point.

Next, a promotional message path table and a record stored in the corresponding table are exemplified as Table 9 below. Herein, the promotional message path table may store a transmission path of users who sends and receive a promotional message, a promotional product giveaway lottery score, and the like.

[Table 9]

| Promotion unique number | Product number | Sending user | Receiving user | First term a | Common difference d | Term number (nth) | promotional product giveaway lottery score | Yes or No of end | Correction day | Generation day |
|---|---|---|---|---|---|---|---|---|---|---|
| 67 | 5 | Dkja ng | Jnkim | 50 | -10 | 1 | 75 | Y | 2013-12 | 2013-12 |
| 67 | 5 | Jnki m | xxx | 50 | -10 | 2 | 70 | Y | 2013-12 | 2013-12 |
| 67 | 5 | xxx | yyy | 50 | -10 | 3 | 60 | Y | 2013-12 | 2013-12 |
| 67 | 5 | Yyy | ZZZ | 50 | -10 | 4 | 45 | Y | 2013-12 | 2013-12 |
| 67 | 5 | ZZZ | KKK | 50 | -10 | 5 | 25 | Y | 2013-12 | 2013-12 |
| 68 | 5 | XXX | Dkjan g | 50 | -10 | 1 | 45 | N | 2013-12 | 2013-12 |
| 68 | 5 | Dkja ng | KKK | 50 | -10 | 2 | 25 | N | 2013-12 | 2013-12 |
| 100 | 6 | KKK | ZZZ | 50 | -10 | 1 | 60 | N | 2013-12 | 2013-12 |
| 100 | 6 | ZZZ | Dkjan g | 50 | -10 | 2 | 45 | N | 2013-12 | 2013-12 |
| 100 | 6 | Dkja ng | XXX | 50 | -10 | 3 | 25 | N | 2013-12 | 2013-12 |
| 200 | 7 | Dkja ng | Jnkim | 50 | -10 | 1 | 75 | Y | 2013-12 | 2013-12 |
| 200 | 7 | Jnki m | XXX | 50 | -10 | 2 | 70 | Y | 2013-12 | 2013-12 |
| 200 | 7 | XXX | yyy | 50 | -10 | 3 | 60 | Y | 2013-12 | 2013-12 |
| 200 | 7 | Yyy | ZZZ | 50 | -10 | 4 | 45 | Y | 2013-12 | 2013-12 |
| 200 | 7 | ZZZ | KKK | 50 | -10 | 5 | 25 | Y | 2013-12 | 2013-12 |
| 300 | 7 | ZZZ | Dkjan g | 50 | -10 | 1 | 70 | N | 2013-12 | 2013-12 |
| 300 | 7 | Dkja ng | KKK | 50 | -10 | 2 | 60 | N | 2013-12 | 2013-12 |
| 300 | 7 | KKK | XXX | 50 | -10 | 3 | 45 | N | 2013-12 | 2013-12 |
| 300 | 7 | XXX | yyy | 50 | -10 | 4 | 25 | N | 2013-12 | 2013-12 |

Specifically, if a purchaser first sends a promotional message, a unique ID (i.e., a promotion unique number) for the corresponding message may be generated. A new data record may be generated in the promotional message path table whenever one user sends a promotional message to another user. Whenever the new data record is generated, a promotional product giveaway lottery score may be changed and updated.

Herein, the term number may be a value indicating whether the promotional message is sent through some persons. A term number of a user (Dkjang) who first sends the promotional message may be 1, and a term number of a user (Jnkim) who receives the promotional message from the initial sender and sends the received promotional message may be 2. Meanwhile, the value of Yes or No of end may be a value indicating whether the sending of the promotional message is completed to a maxterm. For example, if a maxterm of [the promotional product data table] is set to 5 (i.e., if the promotional message is sent to a maximum of 5 persons) and if the promotion is sent to the five persons, the value of Yes or No of end may be "Y". If the promotional message is not sent to the five persons yet, the value of Yes or No of end may be "N".

For example, if a promotion unique number is No. 67, as the promotional message may be sent in an order of Dkjang to zzz, since the sending of the promotional message is completed to five users which are a maxterm, the value of Yes or No of end may be "Y". The same promotional product giveaway lottery scores as values stored in the [point data table] may be stored for each user.

Meanwhile, if the promotion unique number is No. 68, the promotional message may be sent to only two persons in an order from xxx to Dkjang. Since the promotional message is not sent to five persons, who are the maxterm, yet, the value of Yes or No of end may be "N". In this case, a promotional product giveaway lottery score is constantly changed as the promotional message is sent, a value currently stored in the promotional product giveaway lottery score may be different from a value stored in the [point data table].

Next, a user promotional product giveaway lottery score table for each promotional product and a record stored in the corresponding table are exemplified as Table 10 below. Herein, the user promotional product giveaway lottery score table for each promotional product may store a promotional product giveaway lottery score for each user (i.e., an aggregated point, a point which is not aggregated, and a waiting point) and the like.

[Table 10]

| User | Dkjang | Dkjang | Dkjang | ZZZ | ZZZ | ZZZ |
|---|---|---|---|---|---|---|
| Product number | 5 | 6 | 7 | 5 | 6 | 7 |
| Yes or No of viewing of advertisement (Default 'N') | Y | N | Y | Y | N | Y |
| Aggregated point (Default 0) | 75 | 0 | 75 | 25 | 0 | 25 |
| Point which is not aggregated (Default 0) | 0 | 25 | 0 | 0 | 45 | 0 |
| Waiting point (Default 0) | 25 | 0 | 60 | 0 | 0 | 70 |
| Correction day | 2013-12 | 2013-12 | 2013-12 | 2013-12 | 2013-12 | 2013-12 |
| Generation day | 2013-12 | 2013-12 | 2013-12 | 2013-12 | 2013-12 | 2013-12 |

Herein, a value of Yes or No of viewing of advertisement may refer to a value about whether a corresponding purchaser views an advertisement included in a received promotional message. Since the product promotion system according to an embodiment of the present invention achieves a predetermined promotion purpose only if a purchaser views an advertisement included in a promotional message, before the purchaser views the advertisement (i.e., if a value of Yes or No of viewing of advertisement is 'N'), a point for the corresponding purchaser may not be included, as a point which is not aggregated, in a promotional product giveaway lottery score.

Meanwhile, if the purchaser completes viewing of the advertisement, the value of Yes or No of viewing of advertisement may be "Y". As such, after the value of Yes or No of viewing of advertisement is "Y", a point for the corresponding purchaser may be included in the promotional product giveaway lottery score. At this time, the promotional product giveaway lottery score may be stored as an aggregated point or a waiting point. Herein, the aggregated point may be a value where the value of Yes or No of end of the [promotional message path table] is "Y" after the sending of the promotional message is completed to the maxterm and may not be any longer changed. Meanwhile, the waiting point may be a value where the value of Yes or No of end of the [promotional message path table] is "N" since the sending of the promotional message is not completed to the maxterm and may be a value where there is a probability to be changed based on the sending of the promotional message. To sum up, the aggregated point may refer to a point where calculation is completed after an advertisement is viewed. The point which is not aggregated may refer to a point which is not aggregated since an advertisement is not viewed. The waiting point may refer to a point which is not aggregated since an advertisement will be viewed. When a point is finally calculated, a total of aggregated points and waiting points may be aggregated.

Next, a point aggregation table (Table 11 - user promotional product giveaway lottery score table for each promotional product) and a record stored in the corresponding table are exemplified as Table 11. A giveaway and point redistribution product reward table (Table 12) and a record stored in the corresponding table are exemplified as Table 12. Herein, the point aggregation table may store the sum of promotional product giveaway lottery scores of a corresponding lottery day, a giveaway providing product number, a probability for point redistribution, a lottery result based on point redistribution, and the like for each purchaser. Meanwhile, the giveaway and point redistribution product reward table may store a reward product number provided for each lottery day, product attributes, a providing level, an amount, and the like.

Herein, the following values may be input as product attributes values of the giveaway and point redistribution product reward table.

1: promotion giveaway product, 2: point redistribution, 3: expected value, 4: the cost of issue

Also, amount values may be the following values based on product attributes values. If the product attributes value is 1, an amount value may indicate the number of provided reward products. If the product attributes value is 2, an amount value may indicate a point to be redistributed. If the product attributes value is 3, an amount value may indicate an expected value. If the product attributes value is 4, an amount value may indicate the cost of issue.

[Table 11]

| User who sends promotional message | Dkjang | ZZZ |
|---|---|---|
| Lottery day | 2013-12-26 | 2013-12-26 |
| The sum of promotional product giveaway lottery scores | 235 (= 75+75+25+60) | 120 (25+25+75) |
| Providing promotional product giveaway number | 2 | - |
| Probability for point redistribution | - | 20% |
| Lottery result based on point redistribution | - | Y |
| Customer complaints | Defective product is delivered | - |
| The person in charge | Hong Gil Dong | - |

[Table 12]

| Lottery day | 2013-12-26 | 2013-12-26 | 2013-12-26 | 2013-12-26 |
|---|---|---|---|---|
| Promotional product giveaway number | 2 | 500 | 10000 | 9000 |
| Product attributes | 1 | 2 | 3 | 4 |
| Providing level | 1 | | | |
| Amount | 1 | 100 | 20000 | 10 |
| Description | First class promotional giveaway product | Point redistribution (Bonus point) | Expected value | Cost of issue |
| The person in charge | Hong Gill Dong | Hong Gill Dong | Hong Gill Dong | Hong Gill Dong |
| Input day | 2013-12-10 | 2013-12-10 | 2013-12-10 | 2013-12-10 |

Specifically, the product promotion system 200 of the service platform according to an embodiment of the present invention may assign a promotional product giveaway lottery score to a purchaser who perform a promotion rather than subtracting a predetermined point and may provide a promotional product giveaway to the purchaser in an order of promotional product giveaway lottery scores obtained during a certain period of time by the purchaser. Also, some of subtracted points may be returned as a coupon of a certain probability to the purchaser, or some of the subtracted points may be returned to purchasers at the same time in the form of redistribution.

First of all, to provide a promotional product giveaway to the purchaser in an order of promotional product giveaway lottery scores obtained during a certain period of time by the purchaser, if a specific time arrives, the sum of promotional product giveaway lottery scores during the corresponding period of time may be obtained. For example, assuming that a promotional product giveaway is provided per day, the sum of promotional product giveaway lottery scores obtained for a day which is December 26, 2013 may be obtained. In case of the purchaser Dkjang, the sum of the promotional product giveaway lottery scores obtained for a day which is December 26, 2013 may be 235 points which are the sum of an aggregated point 75 of product No. 5, a waiting point 25 of the product No. 5, an aggregated point 75 of product No. 7, and a waiting point 60 of the product No. 7 in the [user promotional product giveaway lottery score table for each promotional product] (Herein, a point which is not aggregated, where an advertisement is not viewed until a lottery time may not be included in a promotional product giveaway lottery score). Similarly, the sum of promotional product giveaway lottery scores obtained for a day, which is December 26, 2013, by the purchaser ZZZ may be 120 points.

After, the sum of promotional product giveaway lottery scores for all purchasers may be obtained by the above-mentioned method, a promotional product giveaway which is a reward product may be provided to the purchaser Dkjang who obtains the highest promotional product giveaway lottery score. At this time, referring to a record where a product attributes value of the [giveaway and point redistribution product reward table] is 1, since a providing level value 1 and since an amount value is 1, a product of the promotional product giveaway No. 2 may be provided to one user who has the first promotional product giveaway lottery score.

Meanwhile, after the promotional product giveaway is provided to the purchaser in an order of promotional product giveaway lottery scores obtained by him or her, some of subtracted points may be returned as a coupon of a certain probability of winning to the purchaser. As such, a process of issuing the coupon of the certain probability of winning to the purchaser is as follows:

First of all, an expected value and the cost of issue may be extracted with reference to a record where product attributes values of the [giveaway and point redistribution product reward table] are 3 and 4. A probability for point redistribution may be obtained for each purchaser using the extracted expected value and the extracted cost of issue and a coupon corresponding to the probability is issued and drawn. If the coupon is won, a point corresponding to the expected value may be assigned to the purchaser. At this time, the obtained probability for point redistribution for each purchaser and the lottery result based on the probability may be stored in the [point aggregation table]. A description will be given in detail of this.

Assuming that the number of purchasers who participate in perform a promotion for the day is n, that the extracted expected value is a p Won, that a total deposit is a Tp Won (this is the sum of inversion points), and that the extracted cost of issue (the cost of business or the cost of operation), a maximum probability of winning may be obtained by the following Equation.

(a winning expected value * a maximum probability of winning * the number of participation users) + the cost of business < a total deposit

→ a maximum probability of winning < (Tp-c) / (p * c)

For example, if the number of purchasers is 4 for the day, if a winning expected value is 200, if a total deposit is 400 Won, and if the cost of business is 0 Won,
a maximum probability of winning < (400 - 0) / (200 * 4)
the maximum probability of winning is 50%.

Next, a description will be given of a method of calculating a probability of winning for each applicant based on the obtained maximum probability of winning. It may be assumed that a value in which pop points of the point data table are added for each purchaser follows a normal distribution. Pop points of the point data table may be added for each purchaser, and an average and a standard deviation may be obtained to obtain the probability of a corresponding giveaway lottery score using an Equation below.

$$f(x) = \frac{1}{\sqrt{2\Pi} \times s\tan darddeviation} e^{\frac{(x-average)^2}{2 \times s\tan darddeviation^2}} (where, -\alpha \langle x \langle \alpha)$$

At this time, since the obtained probability is a probability relative to 100%, a value changed to a ratio value of the maximum probability of winning may be the final value using a proportional expression.

$$obtainedprobability = \frac{1}{\sqrt{2\Pi} \times s\tan darddeviation} e^{\frac{(x-average)^2}{2 \times s\tan darddeviation^2}} \times$$

$$\frac{\max imumprobabilityofwinning}{100} (where, -\alpha \langle x \langle \alpha)$$

For example, when an average of promotional product giveaway lottery scores of purchasers is 70 and when a standard deviation is 12, a probability of winning of a purchaser who has a promotion score of 50 is that f(50) = 2.4%. If a maximum probability of winning is 50%, the probability of winning of the corresponding purchaser is that 4.8 * 50% = 2.4%. In this case, a coupon of a 2.4% probability of winning to the corresponding purchaser may be issued. If this coupon is a winning coupon, 200 which are an expected value may be provided.

Herein, a weight value for each degree may be assigned to a purchaser with a lower degree, in other words, a purchaser who starts to first perform a promotion to assign benefits to him or her and to motivate him or her to send a promotional message as soon as possible. For example, a value of (weight value = 1 + 1/degree) may be assigned to assign a weight value to assign a higher giveaway lottery score to a purchaser with a lower degree. As such, the giveaway lottery score to which the weight value is assigned may be temporarily stored to be used in calculation.

Hereinafter, a process of promoting products and providing promotional product giveaways to purchasers, who have performed promotions, in a lottery in the product promotion system 200.

Referring to FIG. 8, first of all, a purchaser who wants to promote a specific product and to obtain a certain giveaway may access a product promotion system 200 and may search for registered promotional products (step S210). The purchaser may select a product to be promoted among the found promotional products (step S220). Next, the purchaser may select a promotional object, to which he or she will send a promotional message, among his or her acquaintances and may send the promotional message to the selected promotional object (step S230). At this time, the purchaser may select the promotional object, to which he or she will send the promotional message, from a friend list stored in his or her smartphone or a friend list stored on a web or application. As such, in the process of selecting the promotional object and sending the promotional message to the promotional object, information about a product number, a first term, a common difference, a maxterm, and a current term number n may be extracted from a promotional product data table.

Subsequently, a point to be subtracted based on the sending of the promotional message may be calculated, and the corresponding point is subtracted (step S240). A description will be given in detail of this.

First of all, a subtraction point, a push point, and a pop point may be obtained from a point data table using a first term, a common difference, and a current n. As such, an example of storing the subtraction point, the push point, and the pop point in the point data table is as described above. Next, a data record including information about sending and receiving users and a current tern number n may be inserted into a promotional message path table. At this time, a promotional product giveaway lottery score may be updated to a changed value. Next, a promotional product giveaway lottery score for each user may be inserted into a user promotional product giveaway lottery score table for each promotional product, using information about a sender and a receiver. Finally, a point of each user may be subtracted by the extracted subtraction point value.

Next, if a lottery time arrives, a promotional product giveaway lottery score for each purchaser may be calculated (step S250). In other words, to provide a promotional product giveaway to the purchaser in an order of promotional product giveaway lottery scores obtained during a certain period of time by the purchaser, if a specific time arrives, the sum of the promotional product giveaway lottery scores during the corresponding period of time may be obtained for each purchaser. At this time, the sum of the promotional product giveaway lottery scores may be the sum of aggregated points and waiting points of the corresponding purchaser. Reward products may be distributed using the obtained sum of the promotional product giveaway lottery scores (step S260). For example, the sum of promotional product giveaway lottery scores obtained for a day, which is December 26, 2013, by each purchaser may be obtained, and a reward product may be provided to a purchaser who obtains the highest promotional product giveaway lottery score.

Next, after the promotional product giveaway is provided to the purchaser in an order of the promotional product giveaway lottery scores obtained by him or her, some of subtracted points may be returned as a coupon of a certain probability of winning to him or her.

In other words, an expected value and the cost of issue may be extracted from a [giveaway and point redistribution product reward table], and a probability for point redistribution may be obtained for each purchaser using the extracted expected value and the cost of issue. A coupon corresponding to the probability may be issued and drawn, and a point corresponding to the expected value may be assigned when the coupon is won.

A fast product promotion effect may be provided to a seller and there may be an effect of meeting the necessity of a tool which may raise branch awareness by providing the system which promotes products to acquaintances of the purchaser and accumulating giveaway lottery scores based on promotional history to recommend service products by the service platform and the service providing method about embodiments of the present invention. Further, an effect of providing easy access to products to the purchaser and saving the cost of using a service advertisement to a seller may be expected by providing a tool which may obtain a service product provided from the seller.

As such, while a few exemplary embodiments have been shown and described with reference to the accompanying drawings, it will be apparent to those skilled in the art that various modifications and variations can be made from the foregoing descriptions. Therefore, other implements, other embodiments, and equivalents to claims are within the scope of the following claims.

[INDUSTRIAL APPLICABILITY]

Embodiments of the present invention may be used in a service platform provided with a shopping mall system for providing a service product according to a sales record and a product promotion system for providing a promotional giveaway product according to a product promotion and a service providing method.

**Claims**

1. A service platform provided with a shopping mall system for providing a service product according to a sales record, the service platform comprising:

   a product sales controller for controlling a product sales- and purchase-related process on the shopping mall system;
   a shopping mall service product generation controller for, when the product sales controller sells a specific product, controlling generation of a predetermined shopping mall service product according to a sales record of the relevant product; and
   a shopping mall service product lottery controller for targeting purchasers who have purchased the product, drawing lots for the shopping mall service product generated by the shopping mall service product controller, and distributing the shopping mall service product.

2. The service platform of claim 1, wherein the shopping mall service product generation controller further comprises:

   a shopping mall service product generator for, when the specific product is sold, comparing an accumulated sales amount for the relevant product with an amount necessary for generating a shopping mall service product, and generating the shopping mall service product; and
   a shopping mall service product distributor for distributing shopping mall service products generated during a predetermined period of time on a per time slot basis.

3. The service platform of claim 1, wherein the shopping mall service product lottery controller comprises:

   a per-purchaser probability calculator for calculating a probability of winning for each purchaser,
   wherein the per-purchaser probability calculator determines whether each purchaser uses a static internet protocol (IP), whether each purchaser uses his or her terminal in a place of registered location information, or whether a terminal is registered in bonus location information, provides a product advertisement, purchases and enters for a special product, and provides an electronic certificate for circulating products without/with charge and as various discount benefits,
   wherein the per-purchaser probability calculator calculates a probability of winning for each purchaser based on one or more of whether each purchaser possesses a basic coupon, whether each purchaser uses a static IP, whether each purchaser uses his or her terminal in a place of registered location information, and whether each purchaser possesses a strengthening coupon,
   wherein the shopping mall service product lottery controller further comprises:

      a seed string generator for generating a seed string for drawing lots; and
      a lottery executing unit for extracting the seed string corresponding to a probability of winning for each purchaser and determining whether the shopping mall service product is won for a relevant purchaser, using the seed string, and
      wherein the seed string is generated by exchanging a random location of a first string, all of which is filled with 0, for any location of a second string, all of which is filled with 1.

**4.** A service platform provided with a product promotion system for providing a promotional giveaway product according to a product promotion, the service platform comprising:

a promotional product manager for registering a promotional product, received from a terminal of a seller who wants to promote the product, in the product promotion system and managing the received promotional product;
a promotional message manager for receiving a promotional object from a terminal of a purchaser who wants to perform a promotion and sending a predetermined promotional message to the promotional object;
a point manager for managing points possessed by the purchaser who wants to perform the promotion and subtracting a predetermined point when the promotional message is sent;
a promotional product giveaway lottery score manager for managing a promotional product giveaway lottery score of determining whether a promotional product giveaway is won for the purchaser; and
a promotional product giveaway winning controller for determining whether the promotional product giveaway is won for the purchaser, based on a promotional product giveaway lottery score extracted from the promotional product giveaway lottery score manager.

**5.** The service platform of claim 4, wherein the subtraction point subtracted from the purchaser and the promotional product giveaway lottery score are differentiated from each other or are the same as each other based on a length (term number) of a path of sending the product promotional message or are determined by a random number,
wherein the subtraction point is reduced at a certain interval from a predetermined first term value as the term number is increased, and
wherein a maximum value of the term number is preset.

**6.** The service platform of claim 5, wherein the promotional product giveaway lottery score manager calculates a push point which is an accumulated value of points to be used as the promotional product giveaway lottery score among the subtraction points and a pop point which is a reverse value of the push point,
wherein, whenever the promotional message is sent to purchasers, the subtraction point, the push point, and the pop point are stored based on the sending of the promotional message,
wherein the push point and the pop point vary until the term number arrives at a maximum value, and
wherein, after an advertisement included in the promotional message is viewed on the terminal of the purchaser, the pop point is added to the promotional product giveaway lottery score.

**7.** The service platform of claim 4, wherein the promotional product giveaway winning controller determines whether the promotional product giveaway is won for each purchaser in an order of the sum of promotional product giveaway lottery scores obtained during a predetermined period of time by each purchaser,
further comprising:

a coupon issue controller for issuing a coupon of a predetermined probability of winning to the purchaser based on the promotional product giveaway lottery score, after the promotional product giveaway winning controller determines whether the promotional product giveaway is won for the purchaser,
wherein, assuming that a distribution of the promotional product giveaway lottery scores of all purchasers follows a normal distribution, the coupon issue controller issues a coupon on which a probability of winning of an individual purchaser is marked and calculates a probability of winning for the coupon.

**8.** A service providing method provided with a shopping mall system for providing a service product according to a sales record, the method comprising:

selling and purchasing, by a product sales controller, a product on the shopping mall system;
generating, by a shopping mall service product generation controller, a predetermined shopping mall service product according to a sales record of a relevant product, when the specific product is sold; and
targeting, by a shopping mall service product lottery controller, purchasers who have purchased the product, drawing, by the shopping mall service product lottery controller, lots for the generated shopping mall service product, and distributing, by the shopping mall service product lottery controller, the shopping mall service product.

**9.** The method of claim 8, wherein the generating of the shopping mall service product comprises:

comparing an accumulated sales amount for the relevant product with an amount necessary for generating a shopping mall service product when the specific product is sold and generating the shopping mall service product, and
wherein the generating of the shopping mall service product further comprises:

distributing shopping mall service products generated during a predetermined period of time on a per time slot basis.

10. The method of claim 8, wherein the drawing of lots for the shopping mall service product comprises:

calculating a probability of winning for each purchaser based on one of more of whether each purchaser possesses a basic coupon, whether each purchaser uses a static IP, whether each purchaser uses his or her terminal in a place of registered location information, whether a terminal is registered in bonus location information, and whether each purchaser possesses a strengthening coupon,
wherein the drawing of lots for the shopping mall service produce further comprises:

generating a seed string for drawing lots; and
extracting the seed string corresponding to a probability of winning for each purchaser and determining whether the shopping mall service product is won for a relevant purchaser, using the seed string, and wherein the seed string is generated by exchanging a random location of a first string, all of which is filled with 0, for any location of a second string, all of which is filled with 1.

11. A service providing method provided with a product promotion system for providing a promotional giveaway product according to a product promotion, the method comprising:

registering, by a promotional product manager, a promotional product, received from a terminal of a seller who wants to promote the product, in the product promotion system and managing, by the promotional product manager, the received promotional product;
receiving, by a promotional message manager, a promotional object from a terminal of a purchaser who wants to perform a promotion and sending, by the promotional message manager, a predetermined promotional message to the promotional object;
subtracting, by a point manager, a predetermined point from the purchaser who wants to perform the promotion, when the promotional message is sent;
calculating, by a promotional product giveaway lottery score manager, a promotional product giveaway lottery score of determining whether a promotional product giveaway is won for the purchaser; and
determining, by a promotional product giveaway winning controller, whether the promotional product giveaway is won for the purchaser, based on the calculated promotional product giveaway lottery score.

12. The method of claim 11, wherein the subtraction point subtracted from the purchaser and the promotional product giveaway lottery score are differentiated from each other or are the same as each other based on a length (term number) of a path of sending the product promotional message or are determined by a random number,
wherein the subtraction point is reduced at a certain interval from a predetermined first term value as the term number is increased, and
wherein a maximum value of the term number is preset.

13. The method of claim 12, wherein the calculating the promotional product giveaway lottery score comprises:

calculating a push point which is an accumulated value of points to be used as the promotional product giveaway lottery score among the subtraction points and a pop point which is a reverse value of the push point,
wherein, whenever the promotional message is sent to purchasers, the subtraction point, the push point, and the pop point are stored based on the sending of the promotional message,
wherein the push point and the pop point vary until the term number arrives at a maximum value, and
wherein, after an advertisement included in the promotional message is viewed on the terminal of the purchaser, the pop point is added to the promotional product giveaway lottery score.

14. The method of claim 11, wherein the determining whether the promotional product giveaway is won for the purchaser comprises:

determining whether the promotional product giveaway is won for each purchaser in an order of the sum of promotional product giveaway lottery scores obtained during a predetermined period of time by each purchaser,

**15.** The method of claim 11, further comprising:

issuing a coupon, on which a predetermined probability of winning is marked, to the purchaser based on the promotional product giveaway lottery score, and determining whether the promotional product giveaway is won for the purchaser.

**16.** The method of claim 15, wherein the issuing of the coupon comprises:

assuming that a distribution of the promotional product giveaway lottery scores of all purchasers follows a normal distribution, calculating a probability of winning of an individual purchaser.

**17.** A service platform provided with a product promotion system for providing a promotional giveaway product according to a product promotion, the service platform comprising:

a promotional product giveaway lottery score manager for managing a predetermined promotional product giveaway lottery score of determining whether a promotional product giveaway is won for a purchaser; and
a coupon issue controller for issuing a coupon of a predetermined probability of winning to the purchaser based on the promotional product giveaway lottery score,
wherein, assuming that a distribution of the promotional product giveaway lottery scores of all purchasers follows a normal distribution, the coupon issue controller issues a coupon on which a probability of winning of an individual purchaser is marked and calculates a probability of winning the coupon.

**18.** A service providing method provided with a product promotion system for providing a promotional giveaway product according to a product promotion, the method comprising:

calculating, by a promotional product giveaway lottery score manager, a predetermined promotional product giveaway lottery score of determining whether a promotional product giveaway is won for a purchaser; and
issuing an advertisement coupon, on which a predetermined probability of winning is marked, to the purchaser based on the promotional product giveaway lottery score,

wherein the issuing of coupon comprises:

assuming that a distribution of the promotional product giveaway lottery scores of all purchasers follows a normal distribution, calculating a probability of winning of an individual purchaser.

FIG. 1

FIG. 2

# FIG. 3

```
          ┌─────────┐
          │  START  │
          └─────────┘
               │
               ▼
   ┌───────────────────────────┐
   │   GENERATE SHOPPING MALL  │──── S120
   │      SERVICE PRODUCT      │
   └───────────────────────────┘
               │
               ▼
   ┌───────────────────────────┐
   │  DRAW LOTS FOR SHOPPING MALL │──── S130
   │       SERVICE PRODUCT     │
   └───────────────────────────┘
               │
               ▼
          ┌─────────┐
          │   END   │
          └─────────┘
```

# FIG. 4

START TO GENERATE SHOPPING
MALL SERVICE PRODUCT

EXTRACT AMOUNT NECESSARY FOR GENERATING
SHOPPING MALL SERVICE PRODUCT — S121

AMOUNT OF SALES INTERIM ACCUMULATION =
AMOUNT OF SALES INTERIM ACCUMULATION
+ AMOUNT OF ORDERS — S122

S123
AMOUNT OF SALES
INTERIM ACCUMULATION ≥ AMOUNT
NECESSARY FOR GENERATING SHOPPING
MALL SERVICE PRODUCT

NO

YES

GENERATE SHOPPING MALL SERVICE PRODUCT — S124

INCREASE THE SUM OF AMOUNTS OF
GENERATING SHOPPING MALL SERVICE PRODUCT — S125

AMOUNT OF SALES INTERIM ACCUMULATION =
AMOUNT OF SALES INTERIM ACCUMULATION/
AMOUNT NECESSARY FOR GENERATING
SHOPPING MALL SERVICE PRODUCT — S126

END GENERATION OF SHOPPING MALL
MALL SERVICE PRODUCT

## FIG. 5

```
┌──────────────────────────────────┐
│  START TO DRAW LOTS FOR SHOPPING  │
│      MALL SERVICE PRODUCT         │
└──────────────────────────────────┘
                 │
                 ▼
┌──────────────────────────────────┐
│      GENERATE SEED STRING         │──── S131
└──────────────────────────────────┘
                 │
                 ▼
┌──────────────────────────────────┐
│  EXTRACT PROBABILITY INFORMATION  │──── S132
│       FOR EACH PURCHASER          │
└──────────────────────────────────┘
                 │
                 ▼
┌──────────────────────────────────┐
│  OBTAIN SEED STRING FROM THE SAME │
│  SEED STRING TABLE AS PROBABILITY │──── S134
│       FOR EACH PURCHASER          │
└──────────────────────────────────┘
                 │
                 ▼
┌──────────────────────────────────┐
│     GENERATE RANDOM NUMBER        │──── S135
└──────────────────────────────────┘
                 │
                 ▼
┌──────────────────────────────────┐
│  EXTRACT CHARACTER OF LOCATION    │
│ CORRESPONDING TO RANDOM NUMBER    │──── S136
│ GENERATED IN OBTAINED SEED STRING │
└──────────────────────────────────┘
                 │
                 ▼
         ╱──── S137
       ◇─────────────────◇        NO
       < EXTRACTED CHARACTER = '1' >────┐
       ◇─────────────────◇             │
                 │ YES                  │
                 ▼                      │
┌──────────────────────────────────┐   │
│           WINNING                 │── S138
└──────────────────────────────────┘   │
                 │◄─────────────────────┘
                 ▼
┌──────────────────────────────────┐
│  END TO DRAW LOTS FOR SHOPPING    │
│      MALL SERVICE PRODUCT         │
└──────────────────────────────────┘
```

FIG. 6

|   | 1 | 2 | 3 | 4 | 5 | ... | n-4 | n-3 | n-2 | n-1 | n |
|---|---|---|---|---|---|-----|-----|-----|-----|-----|---|
| A | 0 | 0 | 0 | 0 | 0 | ... | 0 | 0 | 0 | 0 | 0 |

REPEATEDLY GENERATE A' AND B'
BY EXCHANGING RANDOM LOCATIONS

|   | 1 | 2 | 3 | 4 | 5 | ... | n-4 | n-3 | n-2 | n-1 | n |
|---|---|---|---|---|---|-----|-----|-----|-----|-----|---|
| B | 1 | 1 | 1 | 1 | 1 | ... | 1 | 1 | 1 | 1 | 1 |

## FIG. 7

# FIG. 8

START

SEARCH FOR PROMOTIONAL PRODUCT — S210

SELECT PROMOTIONAL PRODUCT — S220

SELECT PROTMOTIONAL OBJECT AND SEND PROMOTIONAL MESSAGE — S230

SUBTRACT POINT — S240

CALCULATE PROMOTIONAL PRODUCT GIVEAWAY LOTTERY SCORE — S250

DISTRIBUTE PROMOTIONAL PRODUCT GIVEAWAY — S260

CALCULATE PROBABILITY FOR POINT REDISTRIBUTION — S270

ISSUE AND DRAW COUPON CORRESPONDING TO CALCULATED PROBABILITY — S280

END

FIG. 9

## INTERNATIONAL SEARCH REPORT

| International application No. |
|---|
| **PCT/KR2015/000252** |

### A. CLASSIFICATION OF SUBJECT MATTER

***G06Q 30/06(2012.01)i, G06Q 30/02(2012.01)i***

According to International Patent Classification (IPC) or to both national classification and IPC

### B. FIELDS SEARCHED

Minimum documentation searched (classification system followed by classification symbols)

G06Q 30/06; G06Q 50/30; G06Q 30/00; G06Q 50/34; G06Q 30/02

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: product sales, performance, draw, gift, win

### C. DOCUMENTS CONSIDERED TO BE RELEVANT

| Category* | Citation of document, with indication, where appropriate, of the relevant passages | Relevant to claim No. |
|---|---|---|
| Y | KR 10-2007-0107425 A (O, Seong Ko) 07 November 2007<br>See pages 5 to 7 and claims 1 to 16. | 1,8 |
| A | | 2-3,9-10 |
| Y | KR 10-2006-0128769 A (CHOI, Gi Jia) 14 December 2006<br>See page 5 and claims 1 to 11. | 1,8 |
| A | | 2-3,9-10 |
| Y | KR 10-2013-0097696 A (PUMPING CO., LTD) 03 September 2013<br>See paragraphs [0018] to [0059]. | 4,11,17,18 |
| A | | 5-7,12-16 |
| Y | KR 10-0707972 B1 (SHIN, Yong Gyun) 16 April 2007<br>See abstract and claims 1 to 7. | 4,11 |
| A | | 5-7,12-16 |
| Y | KR 10-2003-0094543 A (ZEPETRONIX CO., LTD.) 18 December 2003<br>See claims 1 to 4 and figures 1 to 3. | 17,18 |
| A | | 5-7,12-16 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 APRIL 2015 (13.04.2015) | **13 APRIL 2015 (13.04.2015)** |

| Name and mailing address of the ISA/**KR** | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2015/000252**

| Patent document cited in search report | Publication date | Patent family member | Publication date |
|---|---|---|---|
| KR 10-2007-0107425 A | 07/11/2007 | NONE | |
| KR 10-2006-0128769 A | 14/12/2006 | NONE | |
| KR 10-2013-0097696 A | 03/09/2013 | KR 10-2012-0113168 A<br>WO 2012-138022 A1 | 12/10/2012<br>11/10/2012 |
| KR 10-0707972 B1 | 16/04/2007 | NONE | |
| KR 10-2003-0094543 A | 18/12/2003 | US 2003-0225616 A1 | 04/12/2003 |

Form PCT/ISA/210 (patent family annex) (July 2009)